# EUROPÄISCHE PATENTSCHRIFT

(11) **EP 2 545 779 B1**
(45) Veröffentlichungstag und Bekanntmachung des Hinweises auf die Patenterteilung: **15.03.2017**
(21) Anmeldenummer: 12005166.9
(22) Anmeldetag: 13.07.2012
(51) Int. Cl.: A22C 11/02, A22C 7/00, A22C 15/00

(54) **Vorrichtung und Verfahren zur Herstellung kalibertreuer Würste**
Method and device for manufacturing reliable calibre sausages
Dispositif et procédé destinés à la fabrication de saucisses de gabarit conforme

(30) Priorität: 15.07.2011 DE 102011079265
(43) Veröffentlichungstag der Anmeldung: 16.01.2013
(73) Patentinhaber: Kaufland Fleischwaren Heilbronn GmbH & Co. KG, 74172 Neckarsulm (DE)
(72) Erfinder: Leichter, Herwig, 70190 Stuttgart (DE)
(74) Vertreter: Schmid, Nils T.F.

(56) Entgegenhaltungen:
- WO-A2-2006/119421
- DE-U1-202008 005 360
- US-A- 2 897 745
- US-A- 5 330 382
- US-A1- 2006 178 101
- US-A1- 2006 280 850

## Beschreibung

Die Erfindung betrifft eine Vorrichtung und ein Verfahren zur Herstellung kalibertreuer Würste.

Die Erfindung betrifft weiterhin eine Verwendung eines Wurstrohrs zur Aufnahme von Wurstbrät in einer Vorrichtung zur Herstellung kalibertreuer Würste.

Die Erfindung betrifft ferner eine Verwendung eines Rahmengestells zur Aufnahme mehrerer Wurstrohre.

Die Erfindung betrifft ferner ein Verfahren zum Lagern und/oder Verarbeiten kalibertreuer Würste.

Die Erfindung liegt auf dem Gebiet der Herstellung von Würsten, insbesondere Brüh- und/oder Rohwürsten und/oder Kochpökelwaren. Wenn im Folgenden auf Würste, Wurstbrät oder Wurstwaren Bezug genommen wird, gilt dies ebenso für in ihren Eigenschaften ähnliche Waren mit ähnlicher Verarbeitung.

Für die Herstellung von egalisierten Wurstpackungen, beispielsweise abgepacktem Wurstaufschnitt in Fertigpackungen für den Einzelhandel, ist ein bestimmtes Sollgewicht, insbesondere das auf der Verpackung angegebene Gewicht, einzuhalten. Solche Anforderungen sind beispielsweise in der deutschen Fertigpackungsverordnung festgelegt. Da Lebensmittel, hier insbesondere Würste, in ihren Eigenschaften und Abmessungen häufig gewissen Schwankungen unterliegen, kommt es im Herstellungsprozess gegebenenfalls zu Abweichungen vom Sollgewicht, beispielsweise wenn zwar Anzahl und Dicke der Scheiben in einer Fertigpackung gleich sind, jedoch der Scheibendurchmesser variiert. Um das Sollgewicht im Zweifel nicht zu unterschreiten, bemessen die Hersteller daher in der Regel die abzupackende Menge Lebensmittel als Sollgewicht plus Standardabweichung. Dies führt insbesondere bei größeren Standardabweichungen zu deutlichen, insbesondere monetären, Verlusten auf Seiten der Hersteller, da in den Fertigpackungen teilweise deutlich mehr Ware enthalten ist als das Gewicht auf der Fertigpackung angibt.

Eine Vorrichtung zum Herstellen von Gyrosspießen in konusförmigen Formen ist in der US-Anmeldeschrift US 2006/0280850 A1 beschrieben.

Die Gebrauchsmusterschrift DE 20 2008 005 360 U1 beschreibt eine Form zur Herstellung länglicher Würste mit einer Oberschale und einer Unterschale. Eine Vorrichtung zur Herstellung von Würsten in einer Tunnelstruktur, bei welcher die Würste mittels Förderbändern aus der Vorrichtung transportiert werden, ist in der US 5,330,382 beschrieben. Die Entnahme von in einer Form hergestellten Wurstware mittels eines verschiebbaren Stempels ist in der US 2,897,745 beschrieben.

Die US-Anmeldeschrift US 2006/0178101 A1 beschreibt eine Fördervorrichtung mit einem Endlosband zum Transportieren von Wurstwaren.

Es ist daher eine Aufgabe der vorliegenden Erfindung, einen oder mehrere der genannten Nachteile zu vermeiden oder zu reduzieren. Es ist eine weitere Aufgabe der vorliegenden Erfindung, eine Vorrichtung und ein Verfahren bereitzustellen, die die Herstellung von kalibertreuen Würsten vereinfachen und/oder kostengünstiger machen.

Diese Aufgabe wird gelöst durch eine Vorrichtung zur Herstellung kalibertreuer Würste, umfassend ein Wurstrohr mit einem über eine Wurstlänge konstanten Wurstrohrquerschnitt und einem geschlossenen Ende und einem offenen Ende, ein Füllrohr mit einem Füllrohrquerschnitt und einer Längsachse zum Befüllen des Wurstrohrs mit Wurstbrät aus einem Wurstbrätspeicher; und einen Schlitten, der angeordnet und ausgebildet ist, eine Relativbewegung entlang der Längsachse des Füllrohrs des auf dem Schlitten und im Wesentlichen koaxial zum Füllrohr angeordneten Wurstrohrs zum Füllrohr von einer ersten in eine zweite Position und umgekehrt zu ermöglichen, wobei in der ersten Position ein Abschnitt des Füllrohrs in dem Wurstrohr angeordnet ist und in der zweiten Position das Wurstrohr von dem Füllrohr in Richtung der Längsachse beabstandet ist, wobei das Wurstrohr an seinem geschlossenen Ende eine Öffnung aufweist, deren Durchmesser derart bemessen und angeordnet ist, dass in dem Wurstrohr hergestellte und noch in dem Wurstrohr befindliche Wurstware mittels einer an die Öffnung angesetzten Druckluftquelle aus dem offenen Ende des Wurstrohres ausgetrieben werden kann.

Der Erfindung liegt insbesondere die Erkenntnis zugrunde, dass insbesondere so genannte "Kaliberschwankungen" bei Wurstwaren, d. h. Unterschiede im Durchmesser von Würsten untereinander aber auch über die so genannte Wurstlänge einer einzelnen Wurst hinweg, die Abweichungen bzw. die Standardabweichung vom Sollgewicht von in einer Fertigpackung zusammengestellter Wurstware deutlich erhöhen. Ein weiterer Nachteil solcher Kaliberschwankungen ergibt sich beim, vorzugsweise automatisierten, Schneiden der Würste in Wurstscheiben auf einem so genannten "Slicer". Dabei kann es bei Würsten mit zu kleinem Durchmesser zu ungewünschten Bewegungen bzw. Verschiebungen der Wurst kommen, insbesondere in Relation zur üblicherweise als fixe Metallkante ausgebildeten Schneidkante des-Slicers. Bei Würsten mit zu großem Durchmesser beispielsweise kann ein Überquellen der Wurst an der Schneidkante auftreten. Solche Kaliberschwankungen beeinträchtigen die Schneidgenauigkeit und wirken sich damit ebenfalls negativ auf die Sollgewichtserreichung aus.

Der Erfindung liegt ferner die Erkenntnis zugrunde, dass bestehende Kaliberschwankungen zumindest teilweise durch den Herstellungsprozess und darin verwendete Vorrichtungen verursacht sind. Beispielsweise ist es bekannt, Wurstbrät in einen Darm abzufüllen und in diesem Darm, beispielsweise durch Kochen, zu Würsten weiterzuverarbeiten. Da sowohl Kunststoffals auch Naturdärme flexible Materialien sind und sich daher im Herstellungsprozess teilweise deutlich unterschiedlich verhalten können, kommt es bei dieser Art der Wurstherstellung häufig zu Kaliberschwankungen der fertigen Wurst. Es ist weiterhin bekannt, Wurstbrät in Halbschalen zu füllen und diese beispielsweise mit mechanischen Verbindungselementen zusammenzufügen und die Wurst in diesen verbundenen Halbschalen weiterzuverarbeiten. Auch bei dieser Herstellungsart treten jedoch teilweise deutliche Kaliberschwankungen der hergestellten Würste auf, da die Festigkeit der Verbindung der Halbschalen von der Belastbarkeit der Verbindungselemente abhängt, die teilweise den beim Verarbeiten der Würste entstehenden Kräften, beispielsweise einem beim Kochen entstehenden Innendruck, nicht vollständig standhalten, so dass es zu Verformungen der verbundenen Halbschalen und damit zu Kaliberschwankungen im fertigen Wurstprodukt kommen kann.

Ein Kerngedanke der Erfindung ist es daher, eine Vorrichtung zur Herstellung kalibertreuer Würste bereitzustellen, die es ermöglicht, durchgehende, vorzugsweise einstückig ausgebildete, Wurstrohre mit Wurstbrät zu befüllen. Unter einem durchgehenden Wurstrohr ist hier vorzugsweise ein in Umfangsrichtung einstückig ausgebildetes Wurstrohr zu verstehen, das an einem oder beiden Enden offen sein kann. Vorzugsweise jedoch ist ein Wurstrohr zumindest an einem seiner Enden fest oder lösbar verschlossen. Solche Wurstrohre sind beispielsweise hohle Rohre mit einem freien Innenquerschnitt, in den das Wurstbrät eingefüllt werden kann. Besonders bevorzugt sind hohlzylinderförmige Rohre mit kreisförmigem Querschnitt. Weiterhin ist bevorzugt, dass die Wurstrohre einen über eine Wurstlänge konstanten Querschnitt aufweisen. Ferner ist bevorzugt, dass die Rohre einstückig ausgebildet sind. Die einstückig ausgebildeten Wurstrohre können an beiden Enden offen sein und beispielsweise durch separate Deckel verschlossen werden. Alternativ kann auch ein Ende geschlossen sein und der Deckel etwa ebenfalls einstückig mit dem Rohr ausgebildet sein. Auch kann ein Deckel für ein geschlossenes Ende zwar nicht einstückig mit dem Rohr ausgebildet, jedoch mit diesem verbunden sein. Vorzugsweise ist ein Wurstrohr aus Metall, insbesondere Aluminium oder Edelstahl, ausgebildet oder weist Metall, insbesondere Aluminium oder Edelstahl, auf.

Bei der Verwendung von Wurstrohren kann sich das Wurstbrät im Verarbeitungsprozess, insbesondere beim Kochen, nur bis maximal an den Innendurchmesser des Wurstrohres, gegebenenfalls abzüglich eines zwischen Innenwand des Wurstrohres und Wurstbrät angeordneten Darms, ausdehnen. Eine Überschreitung eines gewünschten Durchmessers der fertigen Wurst, die durch den Durchmesser des Wurstrohres vorgegeben ist, tritt daher insbesondere bei einstückig ausgebildeten Wurstrohren nicht auf.

Die Verwendung solcher Wurstrohre ist jedoch mit existierenden, nicht erfindungsgemäßen Vorrichtungen und Verfahren zur Herstellung von Würsten nicht möglich. Dabei ist insbesondere zu beachten, dass bei der industriellen Herstellung von Würsten Wurstlängen von über einem Meter, beispielsweise 1500 Millimetern, üblich sind. Die Schwierigkeiten bei der Handhabung von entsprechend langen, durchgehenden Wurstrohren und insbesondere deren Befüllung und anschließend die Entnahme der fertigen Würste aus solchen Wurstrohren als ließen die Verwendung durchgehender Wurstrohre als nicht anwendbar erscheinen.

Die erfindungsgemäße Vorrichtung zur Herstellung kalibertreuer Würste ermöglicht es jedoch, solche durchgehenden Wurstrohre entsprechender Länge zu verwenden und vermeidet bzw. reduziert daher die vorgenannten Nachteile und ermöglicht eine deutliche Reduzierung der Kaliberschwankungen der fertigen Würste. Die erfindungsgemäße Vorrichtung weist dazu ein Füllrohr auf, mit dem Wurstbrät aus einem Wurstbrätspeicher in durchgehende Wurstrohre gefördert werden kann, um die Wurstrohre mit dem Wurstbrät zu befüllen. Der Wurstbrätspeicher kann beispielsweise Teil einer Füllmaschine sein, vorzugsweise einer Vakuumfüllmaschine. Das Füllrohr ist vorzugsweise als hohles Rohr ausgebildet, beispielsweise als zylinderförmiges Hohlrohr mit kreisförmigem Füllrohrquerschnitt. Das Füllrohr ist vorzugsweise so mit dem Wurstbrätspeicher verbunden, dass Wurstbrät an einem Ende des Füllrohrs in das Innere des Füllrohrs eintritt, das Füllrohr über die Füllrohrlänge ausfüllt und am anderen Ende des Füllrohrs (dem Austrittsende) aus dem Füllrohr austreten kann.

Das aus dem Wurstbrätspeicher in das Innere des Füllrohrs geförderte Wurstbrät ist bei der Herstellung kalibertreuer Würste in ein durchgehendes Wurstrohr zu fördern. Um dies zu ermöglichen, sieht die erfindungsgemäße Vorrichtung einen beweglichen Schlitten vor, der relativ zum Füllrohr und parallel zur Längsachse des Füllrohrs beweglich geführt ist. Auf dem Schlitten kann ein Wurstrohr angeordnet werden. Der Schlitten ist dabei derart dimensioniert und so in Relation zum Füllrohr angeordnet, dass ein Wurstrohr, das sich auf dem Schlitten befindet, im Wesentlichen koaxial zum Füllrohr angeordnet ist. Unter einem Schlitten wird eine Vorrichtung verstanden, die einerseits eine Auflage eines Wurstrohrs und damit eine entsprechende Führung des Wurstrohrs durch den Schlitten ermöglicht und andererseits derart verschieblich gelagert ist, dass eine Relativbewegung in einer Richtung parallel zur Längsachse des Füllrohrs des Schlittens möglich ist, so dass ein auf dem Schlitten angeordnetes Wurstrohr eine koaxiale Relativbewegung des Wurstrohrs entlang der Längsachse zum Füllrohr möglich ist.

Das Wurstrohr weist vorzugsweise einen größeren Querschnitt auf als das Füllrohr, so dass das Füllrohr zumindest abschnittsweise im Wurstrohr aufgenommen werden kann in einer ersten Position des Wurstrohrs. In dieser ersten Position des Wurstrohres befindet sich das Austrittsende des Füllrohrs vorzugsweise im Inneren des Wurstrohrs. Vorzugsweise befindet sich das Austrittsende des Füllrohrs in der ersten Position im Inneren des Wurstrohres nach eines geschlossenen Endes des Wurstrohres. Beim Befüllen des Wurstrohres tritt aus dem Austrittsende des Füllrohrs Wurstbrät aus und füllt das Innere des Wurstrohres. Je mehr Wurstbrät in das Wurstrohr gefördert wird, desto weiter bewegt sich das Wurstrohr entlang der Längsachse relativ zum Füllrohr, bis es in der zweiten Position angelangt ist und das Füllrohr nicht mehr abschnittsweise innerhalb des Wurstrohres angeordnet ist, sondern das Wurstrohr in Richtung der Längsachse zum Füllrohr beabstandet ist. In dieser zweiten Position ist nach einem Befüllvorgang das Wurstrohr vorzugsweise über die gesamte Wurstlänge mit Wurstbrät befüllt. Die für einen solchen Befüllvorgang erforderliche geführte Relativbewegung zwischen Wurstrohr und Füllrohr wird durch den entsprechend beweglichen Schlitten der erfindungsgemäßen Vorrichtung ermöglicht.

Vorzugsweise im Betriebszustand der Vorrichtung ist das Füllrohr im Wesentlichen waagerecht angeordnet. Weiterhin vorzugsweise weist die Vorrichtung eine Füllrohrstütze auf, mit der das Füllrohr abgestützt werden kann, so dass insbesondere die Stabilität des Füllrohrs erhöht werden kann.

Bevorzugt ist ferner, dass das Füllrohr eine Füllrohrlänge aufweist, die größer oder gleich einer Wurstlänge von in Wurstrohren herzustellenden Würsten ist. Insbesondere ist es bevorzugt, dass die Wurstlänge zwischen ein und zwei Metern, insbesondere ca. 1.500 Millimeter beträgt. Ferner ist es besonders bevorzugt, dass das Füllrohr eine Länge von mehr als einem Meter, insbesondere eine Länge von mehr als 1500 Millimeter, und insbesondere eine Länge von 1800 Millimeter, aufweist. Auch ist es besonders bevorzugt, dass die zur Verwendung kommenden Wurstrohre eine Länge von mehr als einem Meter, insbesondere eine Länge von 1500 Millimeter, aufweisen.

Zudem ist besonders bevorzugt, dass der Durchmesser, vorzugsweise ein Innendurchmesser, der verwendeten Wurstrohre zwischen 90 und 100 Millimeter, vorzugsweise 97,5 Millimeter, beträgt. Dabei ist ferner bevorzugt, dass das Füllrohr und gegebenenfalls die um das Füllrohr herum angeordneten Führungsschienen einen Außenquerschnitt aufweisen, der so bemessen ist, dass er kleiner ist als ein Innenquerschnitt des Wurstrohres.

Die Vorrichtung erfordert somit in einer Richtung der Längsachse des Füllrohrs einen Raumbedarf, der der Länge des Füllrohrs plus der Länge des Wurstrohrs entspricht, um das Wurstrohr in der zweiten Position in Richtung der Längsachse beabstandet vom Füllrohr anordnen zu können. Von dieser zweiten Position aus kann das Wurstrohr dann quer zur Längsachse weitertransportiert werden. Aufgrund der Anordnung des Schlittens und des Füllrohrs in der erfindungsgemäßen Vorrichtung in der Art, dass ein auf dem Schlitten befindliches Wurstrohr koaxial über das Füllrohr geschoben werden kann, so dass mit dem Füllrohr das Wurstrohr von innen her von seinem ersten bis zu seinem zweiten Ende befüllt werden kann, indem einerseits kontinuierlich aus dem im Inneren des Wurstrohrs befindlichen Austrittsende des Füllrohrs Wurstbrät aus dem Füllrohr in das Wurstrohr gefördert wird und gleichzeitig das Wurstrohr mittels des Schlittens in Richtung der Längsachse wieder vom Füllrohr wegbewegt wird, ist es möglich, in einfacher, kostengünstiger und zuverlässiger Weise durchgehende Wurstrohre mit der erfindungsgemäßen Vorrichtung zu befüllen.

Eine bevorzugte Ausführungsform der Erfindung ist gekennzeichnet durch eine Haltevorrichtung, die angeordnet und ausgebildet ist, eine im Wesentlichen koaxial zum Füllrohr angeordnete Darmraupe an einem Ende des Füllrohrs zurückzuhalten und gleichzeitig eine kontinuierliche Abgabe von Darm entlang der Längsachse des Füllrohrs zu ermöglichen.

In der Wurstherstellung wird das Wurstbrät meist in einem Kunst- oder Naturdarm zu Würsten weiterverarbeitet. Auch in der erfindungsgemäßen Vorrichtung zur Herstellung kalibertreuer Würste ist es bevorzugt, das aus dem Ende des Füllrohrs austretende Wurstbrät in einem Darm in das Wurstrohr zu fördern. Eine einfache und daher bevorzugte Möglichkeit hierfür ist es, den Darm als Darmraupe koaxial über das Füllrohr zu stülpen und an einem Ende des Füllrohrs, vorzugsweise an dem Ende, an dem das Füllrohr mit dem Wurstbrätspeicher verbunden ist, zu fixieren und dort von einem als aufgeschossenen Endlosdarm fixierten Darmraupe ein Ende des Darms bis zum Austrittsende des Füllrohrs zu ziehen. Auf diese Weise kann am Austrittsende des Füllrohrs das austretende Wurstbrät gleich mit dem Darm überzogen beziehungsweise gleichzeitig mit dem Darm in das Wurstrohr gefördert werden. Die Haltevorrichtung ist dabei vorzugsweise derart ausgebildet, dass sie zwar die Darmraupe an einem Ende des Füllrohrs zurückhält, das Abziehen von Darm von der Darmraupe in Richtung der Längsachse des Füllrohrs jedoch nicht behindert.

Vorzugsweise ist an dem Austrittsende des Füllrohrs oder in der Nähe davon eine Verschließeinrichtung, beispielsweise eine Clipstation, angeordnet, um den Darm am Anfang und am Ende einer Wurst zu verschließen. Vorzugsweise wird mit der Verschlussvorrichtung der Darm am Austrittsende des Füllrohrs verschlossen, bevor mit dem Schlitten ein Wurstrohr auf das Füllrohr und damit auch über den Darm aufgeschoben wird. Auf diese Weise ist das verschlossene Darmende an einem vorzugsweise geschlossenen Ende des Wurstrohrs angeordnet und das Wurstrohr kann kontinuierlich mit dem im Darm befindlichen Wurstbrät befüllt werden. Wenn sich das Wurstrohr dann in der zweiten Position befindet, ist es weiterhin bevorzugt, dass mittels der Verschlussvorrichtung der Darm nahe einem vorzugsweise offenen Ende des Wurstrohrs verschlossen wird und dann von dem übrigen, noch auf dem Füllrohr befindlichen Darm getrennt wird, so dass das Wurstrohr mit einer darin befindlichen Rohwurst aus an beiden Enden verschlossenen Darm mit darin befindlichem Wurstbrät weitertransportiert werden kann.

Eine bevorzugte Ausführungsform der Erfindung ist, dass der Schlitten derart ausgebildet und angeordnet ist, dass ein auf dem Schlitten angeordnetes Wurstrohr um die Längsachse rotierbar ist, wobei vorzugsweise der Schlitten zwei parallel zur Längsachse und in einer Ebene angeordnete, um ihre jeweilige Achse drehbar gelagerte Rollen aufweist.

Für die Abtrennung eines Darms und/oder den An-/Ab-/ bzw. Weitertransport von befüllten bzw. leeren Wurstrohren zur Vorrichtung hin und von ihr weg ist es bevorzugt, das Wurstrohr auf dem Schlitten leicht drehen zu können. Besonders bevorzugt ist es, wenn der Schlitten dazu zwei parallele, rotierbare Rollen aufweist, auf denen das Wurstrohr parallel zu den Rollen ausgerichtet aufgenommen werden kann. Durch eine Drehung der Rollen um ihre Längsachse kann auch eine Drehung des darauf angeordneten Wurstrohrs um seine Längsachse erfolgen und umgekehrt. Dies hat zum einen den Vorteil, dass nach dem Befüllen des Wurstrohrs durch eine Drehung der Darm verdreht und dann leichter verschlossen und durchtrennt werden kann. Zum anderen hat die Drehbarkeit des Wurstrohrs auf dem Schlitten und insbesondere die Auflage des Wurstrohrs auf zwei drehbar gelagerten Rollen auf dem Schlitten den Vorteil, dass leere und/oder befüllte Wurstrohre durch Rollen vom Schlitten weg oder zum Schlitten hin transportiert werden können, was für die Bediener der Vorrichtung eine ergonomische Arbeitserleichterung darstellen und den Transportprozess insgesamt vereinfachen und beschleunigen kann.

Eine bevorzugte Ausführungsform der Vorrichtung ist gekennzeichnet durch eine oder mehrere Gleitschienen, die derart um das Füllrohr angeordnet und ausgebildet ist bzw. sind, dass sie eine, insbesondere im Wesentlichen koaxiale, Führung eines Wurstrohres relativ zum Füllrohr unterstützen.

In dieser Ausführungsform sind als Gleitschienen längliche Elemente, vorzugsweise beabstandet vom Außenumfang des Füllrohres, vorgesehen, die sich entlang zumindest eines Abschnitts des Füllrohrs erstrecken und die es erleichtern, ein Wurstrohr koaxial auf das Füllrohr aufzuschieben. Wenn in der Wurstherstellung ein Darm verwendet wird, ist dieser vorzugsweise zwischen dem Außenumfang des Füllrohres und der oder den Gleitschienen angeordnet. In einer besonders bevorzugten Ausführungsform sind drei Gleitschienen äquidistant auf einem Kreisquerschnitt angeordnet, wobei der Kreisquerschnitt größer ist als der Füllrohrquerschnitt und kleiner als ein Innenquerschnitt des Wurstrohrs. Besonders bevorzugt ist es, wenn die Gleitschienen an ihren Enden mit ringförmigen Verbindungselementen versehen sind, so dass ein Aufschieben der Gleitschienen auf das Füllrohr erleichtert wird. Insbesondere bei Anordnungen mit einer Wurstlänge von mehr als einem Meter sind Gleitschienen bevorzugt. Das Vorsehen von Gleitschienen kann insbesondere auch eine Beschädigung des Darms beim Aufschieben des Wurstrohrs auf das Füllrohr vermeiden oder reduzieren.

Eine weitere bevorzugte Ausführungsform ist gekennzeichnet durch eine Bevorratungseinrichtung, auf der ein, zwei oder mehrere Wurstrohre in einer Ebene mit und parallel zu dem Füllrohr, von dem Füllrohr in Richtung der Längsachse beabstandet und zur Längsachse des Füllrohrs versetzt gelagert werden können.

Zur besonders effizienten Beschickung der Vorrichtung mit Wurstrohren ist es bevorzugt, dass Wurstrohre so gelagert werden können, dass sie durch Drehen, Rollen und/oder Verschieben von der Bevorratungseinrichtung auf den Schlitten und umgekehrt transportiert werden können. Auf diese Weise kann nach einem Befüllvorgang eines Wurstrohres das befüllte Wurstrohr schnell aus der zweiten Position wegtransportiert und ein neues, unbefülltes Wurstrohr in die zweite Position gebracht und von dort auf das Füllrohr in die erste Position zum Befüllen aufgeschoben werden. Vorzugsweise ist die Bevorratungseinrichtung als gitterförmige Ablage ausgebildet und weist vorzugsweise Sicherungen auf, die dort gelagerte Wurstrohre vor dem Herunterfallen schützen. Die Bevorratungseinrichtung kann ebenfalls parallel angeordnete und rotierbar gelagerte Rollen aufweisen.

Besonders bevorzugt ist es, wenn die Vorrichtung mit einem oder mehreren Wurstrohren verwendet wird, die einerseits einen über die Wurstlänge konstanten Wurstrohrquerschnitt aufweisen, der in vorteilhafter Weise zur Reduzierung von Kaliberschwankungen beiträgt und andererseits ein geschlossenes und ein offenes Ende aufweist. Das offene Ende des Wurstrohrs dient vorzugsweise dazu, das Wurstrohr auf das Füllrohr aufzuschieben und die fertig hergestellte Wurst aus dem Wurstrohr zu entnehmen. Das offene Ende kann vorzugsweise temporär lösbar mit einem Deckel verschlossen werden. Das geschlossene Ende kann beispielsweise als Anschlag für das Austrittsende des Füllrohrs beim Aufschieben des Wurstrohres auf das Füllrohr dienen. Das geschlossene Ende ist vorzugsweise plan und quer zur Längsachse des Wurstrohrs ausgebildet. Ferner ist es bevorzugt, dass das Wurstrohr an seinem geschlossenen Ende eine Öffnung aufweist, über die mittels Druckluft eine fertig hergestellte, beispielsweise gegarte und abgekühlte, Wurst aus dem offenen Ende des Wurstrohrs ausgetrieben werden kann. Zur Verwendung von Wurstrohren in einer Vorrichtung zur Herstellung kalibertreuer Würste spielt nicht nur das Befüllen dieser Wurstrohre eine wichtige Rolle, sondern auch das Entfernen der fertigen Würste aus den durchgehenden Wurstrohren. Die Ausbildung und Anordnung der Öffnung im geschlossenen Ende des Wurstrohres derart, dass ein Austragen der fertig hergestellten Würste aus dem Wurstrohr mittels Druckluft ermöglicht wird, stellt daher eine besonders bevorzugte Vereinfachung der Herstellung von kalibertreuen Würsten mittels der erfindungsgemäßen Vorrichtung dar.

Eine weitere bevorzugte Ausführungsform der Erfindung ist gekennzeichnet durch einen oder mehrere Sensoren, die ausgebildet sind, die Position des Schlittens und/oder Wurstrohrs entlang der Längsachse des Füllrohrs zu detektieren, insbesondere das Erreichen der ersten und/oder zweiten Position zu erfassen.

Besonders bevorzugt ist es, wenn mit der Vorrichtung reproduzierbar Würste einer vorbestimmten Länge mit geringer Längentendenz hergestellt werden können. Die Wurstlänge wird bestimmt durch die Beabstandung des Wurstrohrs in Längsachse zum Füllrohr, wenn der Befüllvorgang beendet ist. Diese so genannte zweite Position ist vorzugsweise an einer festgelegten Stelle, unabhängig von Produktionseinflüssen wie beispielsweise der spezifischen Dichte oder der Konsistenz des Wurstbräts. Durch Erkennen des Erreichens der zweiten Position kann somit eine über mehrere Befüllvorgänge gleich bleibende Wurstlänge gewährleistet werden, indem der Befüllvorgang bei Erreichen dieser zweiten Position beendet wird. Weiterhin ist es bevorzugt, dass die erste Position des Wurstrohrs in Längsrichtung des Füllrohrs durch dafür vorgesehene Mittel, beispielsweise einen Positionssensor zuverlässig erkannt und angefahren werden kann, um ein Erreichen der genauen Startposition des Befüllvorgangs, d.h., der so genannten ersten Position, sicherzustellen.

Gemäß eines weiteren Aspekts der Erfindung wird die eingangs genannte Aufgabe gelöst durch ein Wurstrohr zur Aufnahme von Wurstbrät in einer Vorrichtung zur Herstellung kalibertreuer Würste, insbesondere einer Vorrichtung wie zuvor beschrieben, mit einem über eine Wurstlänge konstanten Wurstrohrquerschnitt und einem geschlossenen Ende und einem offenen Ende, wobei das Wurstrohr an seinem geschlossenen Ende eine Öffnung aufweist, deren Durchmesser derart bemessen und angeordnet ist, dass in dem Wurstrohr hergestellte und noch in dem Wurstrohr befindliche Wurstware mittels einer an die Öffnung angesetzten Druckluftquelle aus dem offenen Ende des Wurstrohres ausgetrieben werden kann.

Wie bereits dargestellt, stellt sich bei der Verwendung von Wurstrohren zur Herstellung kalibertreuer Würste nicht nur das Problem der Befüllung solcher Wurstrohre mit Wurstbrät, sondern auch das Problem des Entfernens der fertigen Wurst aus dem Wurstrohr. Gemäß dieses Aspekts der Erfindung wird daher ein Wurstrohr bereitgestellt, das es ermöglicht, die fertig hergestellte Wurst mittels Druckluft aus dem Wurstrohr auszutreiben.

In einer bevorzugten Ausführungsform weist das Wurstrohr einen Deckel auf, mit dem das offene Ende des Wurstrohrs lösbar geschlossen werden kann. Ferner ist bevorzugt, dass das geschlossene Ende und/oder der Deckel plan und quer zur Längsachse des Wurstrohrs ausgebildet sind. Auf diese Weise entstehen - auch gegenüber auf andere Arten hergestellten Würsten - relativ plane Wurstenden, so dass beim so genannten Trimmen der Würste nur ein relativ schmaler Trimmbereich an den Wurstenden entfernt werden muss, der nicht als Aufschnitt verwendet werden kann. Auf diese Weise kann der Ausschuss bzw. der nicht als kalibertreuer Aufschnitt verwendbare Teil der hergestellten Wurst in vorteilhafter Weise weiter reduziert werden.

Das erfindungsgemäße Wurstrohr und seine möglichen Fortbildungen sind insbesondere dafür geeignet, mit einer erfindungsgemäßen Vorrichtung zur Herstellung kalibertreuer Würste verwendet zu werden. Zu den Ausführungsdetails des Wurstrohrs und seiner Fortbildungen wird auf die zuvor beschriebenen, entsprechenden Aspekte derjenigen Produktformen und Fortbildungen der Vorrichtung zur Herstellung kalibertreuer Würste verwiesen, die für das Wurstrohr ebenfalls relevant sind.

Gemäß eines weiteren Aspekts der Erfindung wird die eingangs genannte Aufgabe gelöst durch Verwendung eines Wurstrohrs zur Aufnahme von Wurstbrät in einer Vorrichtung zur Herstellung kalibertreuer Würste, insbesondere einer Vorrichtung wie zuvor beschrieben, wobei das Wurstrohr aufweist einen über eine Wurstlänge konstanten Wurstrohrquerschnitt und ein geschlossenes Ende und ein offenes Ende, wobei das Wurstrohr an seinem geschlossenen Ende eine Öffnung aufweist, deren Durchmesser derart bemessen und angeordnet ist, dass in dem Wurstrohr hergestellte und noch in dem Wurstrohr befindliche Wurstware mittels einer an die Öffnung angesetzten Druckluftquelle aus dem offenen Ende des Wurstrohres ausgetrieben werden kann.

Gemäß eines weiteren Aspekts der Erfindung wird die Aufgabe gelöst durch eine Verwendung eines Rahmengestells zur Aufnahme mehrerer Wurstrohre wie zuvor beschrieben, wobei das Rahmengestell ausgebildet ist, mehrere zuvor beschriebene Wurstrohre parallel zueinander aufzunehmen und von einer im Wesentlichen horizontalen in eine im Wesentlichen vertikale Position und umgekehrt zu bewegen.

Dieser Aspekt der Erfindung betont einen weiteren Vorteil der Verwendung von Wurstrohren in der Herstellung kalibertreuer Würste, nämlich die Möglichkeit, mehrere Wurstrohre der vorliegenden Erfindung in einem Rahmengestell parallel zueinander anzuordnen und durch eine Bewegung des Rahmengestells die mehreren darin angeordneten Wurstrohre bewegen zu können. Dadurch wird es möglich, mehrere Wurstrohre gleichzeitig zu handhaben bzw. zu transportieren, indem lediglich das Rahmengestell entsprechend gehandhabt bzw. transportiert werden muss.

Das Rahmengestell ist weiterhin vorzugsweise so ausgebildet, dass es in verschiedenen Verarbeitungsschritten, beispielsweise beim Kochen, Kühlen und/oder Lagern der Wurstrohre und der darin enthaltenen Wurstwaren, im Herstellungsprozess verwendet werden kann, d. h. dass beispielsweise die Wurstrohre im Rahmengestell und zusammen mit dem Rahmengestell einer Kocheinrichtung, einer Kühleinrichtung und/oder einer Lagereinrichtung zugeführt werden.

Die Möglichkeit, das Rahmengestell so zu bewegen, dass die mehreren Wurstrohre von einer im Wesentlichen horizontalen zu einer im Wesentlichen vertikalen Position und umgekehrt bewegt werden können, hat den Vorteil, dass die Wurstrohre in der im Wesentlichen horizontalen Position leicht in das Rahmengestell eingebracht und aus diesem entfernt werden können, beispielsweise um eine erfindungsgemäße Vorrichtung zur Herstellung kalibertreuer Würste zu beschicken bzw. von einer solchen Vorrichtung befüllte Wurstrohre aufzunehmen. Die im Wesentlichen vertikale Position der Wurstrohre im Rahmengestell ist insbesondere beispielsweise beim Kochen, Kühlen und/oder Lagern der Würste bevorzugt. Ein weiterer Vorteil der im Wesentlichen waagerechten Position der Wurstrohre ergibt sich beim Entfernen der hergestellten Würste aus den Wurstrohren mittels Druckluft, die durch die Öffnungen im geschlossenen Boden der Wurstrohre erreicht wird. Hierzu und für ggf. andere Anwendungsbereiche kann es auch bevorzugt sein, das Rahmengestell so zu bewegen, dass die Wurstrohre in einer zur Horizontalen und/oder Vertikalen geneigten Position angeordnet sind bzw. in und aus einer solchen Position bewegt werden können. Vorzugsweise weist das Rahmengestell eine Kippvorrichtung auf, die angeordnet und ausgebildet ist, das Rahmengestell von einer im Wesentlichen horizontalen in eine im Wesentlichen vertikale Position und zurück zu bewegen und weiterhin vorzugsweise in einer im Wesentlichen horizontalen, im Wesentlichen vertikalen und/oder in einer geneigten Position lösbar fixieren zu können.

Eine bevorzugte Ausführungsform des Rahmengestells ist, dass das Rahmengestell einen Boden als Anschlag für die geschlossenen Enden der Wurstrohre aufweist, wobei der Boden derart angeordnet und ausgebildet ist, dass die Öffnungen an den geschlossenen Enden der Wurstrohre durch den Boden zugänglich sind.

Diese Ausführungsform ist besonders bevorzugt, da auf diese Weise die Wurstrohre nicht aus dem Rahmengestell herausgenommen werden müssen, um die hergestellten Wurstwaren mittels Einblasen von Druckluft in die Öffnungen an den geschlossenen Enden der Wurstrohre aus dem Wurstrohren zu entfernen. Besonders bevorzugt ist, dass der Boden gitterartig mit parallelen, voneinander beabstandeten Streben ausgebildet ist.

Weiterhin ist bevorzugt, dass das Rahmengestell eine, zwei oder mehrere, vorzugsweise drei, Abstandsvorrichtungen aufweist, die eine vorzugsweise gleichmäßige, voneinander beabstandete Anordnung der Wurstrohre im Rahmengestell ermöglicht bzw. ermöglichen. Eine Abstandsvorrichtung kann beispielsweise als Kreuzgitter aus zwei Gruppen von jeweils parallelen, zueinander rechtwinkelig und in einer Ebene angeordneten Streben ausgebildet sein. Die Abstandsvorrichtungen sind vorzugsweise derart voneinander beabstandet, dass über die Länge der Wurstrohre hinweg beabstandet vom Boden eine oder mehrere Abstandsvorrichtungen angeordnet sind.

Besonders bevorzugt ist es, dass das Rahmengestell einen rechteckigen oder quadratischen Querschnitt aufweist, wobei insbesondere bevorzugt ist, dass 64 Wurstrohre in einer Anordnung von 8 x 8 Rohren auf einem quadratischen Querschnitt des Rahmengestells angeordnet werden können.

In einer weiteren bevorzugten Ausführungsform ist das Rahmengestell gekennzeichnet durch eine Rückhaltevorrichtung mit Rückhalteöffnungen, wobei die Rückhaltevorrichtung ausgebildet ist, in einer lösbaren Verbindung mit dem Rahmengestell einen Anschlag für die offenen Ende der Wurstrohre zu bilden, und die Rückhalteöffnungen derart ausgebildet und angeordnet sind, dass in den Wurstrohren hergestellte und noch in den Wurstrohren befindliche Wurstware durch die Rückhalteöffnungen der Rückhaltevorrichtung auszutreten.

Eine solche Rückhaltevorrichtung kann beispielsweise als Fixierplatte ausgebildet sein, die an einem dem Boden des Rahmengestells gegenüberliegenden Ende lösbar befestigt werden kann, so dass bei einer entsprechenden Bewegung des Rahmengestells und/oder bei einer Beaufschlagung des Inneren der Wurstrohre durch die Öffnungen in den geschlossenen Enden der Wurstrohre mit Druckluft nur die hergestellten Würste aus den offenen Enden der Wurstrohre und durch die Rückhalteöffnungen der Rückhaltevorrichtung, nicht jedoch die Wurstrohre selbst aus dem Rahmengestell entfernt werden.

Gemäß eines weiteren Aspekts der Erfindung wird die eingangs genannte Aufgabe gelöst durch ein Verfahren zur Herstellung kalibertreuer Würste, umfassend die Schritte: Fördern von Wurstbrät aus einem Wurstbrätspeicher in ein Füllrohr, wobei das Füllrohr einen Füllrohrquerschnitt und eine Längsachse aufweist, Platzieren eines Wurstrohres im Wesentlichen koaxial zum Füllrohr in einer ersten Position, in der ein Abschnitt des Füllrohrs in dem Wurstrohr angeordnet ist, Fördern von Wurstbrät in das Wurstrohr und gleichzeitig Bewegen des Wurstrohrs relativ zum Füllrohr entlang der Längsachse des Füllrohrs mittels eines Schlittens in eine zweite Position, in der das Wurstrohr von dem Füllrohr in Richtung der Längsachse beabstandet ist, sowie Austreiben von in dem Wurstrohr hergestellter und noch in dem Wurstrohr befindlicher Wurstware mittels einer an eine Öffnung in einem geschlossenem Ende des Wurstrohrs angesetzten Druckluftquelle aus einem offenen Ende des Wurstrohrs.

Gemäß eines weiteren Aspekts der Erfindung wird die eingangs genannte Aufgabe gelöst durch ein Verfahren zum Lagern und/oder Verarbeiten kalibertreuer Würste, umfassend die Schritte: Bereitstellen eines Rahmengestells wie zuvor beschrieben, Anordnen mehrerer Wurstrohre wie zuvor beschrieben in dem Rahmengestell, Austreiben von in den Wurstrohren hergestellter und noch in den Wurstrohren befindlicher Wurstware mittels einer an die jeweilige Öffnung in den geschlossenen Enden der Wurstrohre angesetzten Druckluftquelle aus den offenen Enden der Wurstrohre.

Die erfindungsgemäßen Verfahren dieser weiteren Aspekte weisen Merkmale bzw. Verfahrensschritte auf, die sie insbesondere dafür geeignet machen, verwendet zu werden für bzw. mit einer erfindungsgemäßen Vorrichtung zur Herstellung kalibertreuer Würste, mit erfindungsgemäßen Wurstrohren zur Aufnahme von Wurstbrät in einer Vorrichtung zur Herstellung kalibertreuer Würste und/oder für bzw. mit einem erfindungsgemäßen Rahmengestell zur Aufnahme mehrerer Wurstrohre sowie der jeweiligen Fortbildungen. Zu den Vorteilen, Ausführungsvarianten und Ausführungsdetails dieser weiteren Verfahrensaspekte der Erfindung und ihrer Fortbildungen wird auf die zuvor beschriebenen, entsprechenden Aspekte derjenigen Produktformen und Fortbildungen verwiesen, die für die entsprechenden Verfahrensaspekte der Erfindung relevant sind.

Eine bevorzugte Ausführungsform der Erfindung wird beispielhaft anhand der beiliegenden Figuren beschrieben. Es zeigen:
- Fig. 1:: eine dreidimensionale Ansicht einer Vorrichtung zur Herstellung kalibertreuer Würste;
- Fig. 2:: eine Seitenansicht eines Ausschnitts mit Darmraupe und Haltevorrichtung aus Fig. 1;
- Fig. 3:: eine Seitenansicht eines Ausschnitts mit Darmbremse aus Figur 1;
- Fig. 4:: eine dreidimensionale Ansicht eines teilweise auf das Füllrohr aufgeschobenen Wurstrohrs;
- Fig. 5:: eine dreidimensionale vergrößerte Ansicht eines Teils des Schlittens einer erfindungsgemäßen Vorrichtung;
- Fig. 6:: ein Wurstrohr, ein Füllrohr sowie eine Verschlussvorrichtung für eine erfindungsgemäße Vorrichtung;
- Fig. 7:: eine dreidimensionale Ansicht von Bevorratungseinrichtungen einer erfindungsgemäßen Vorrichtung;
- Fig. 8:: eine weitere dreidimensionale Ansicht von Bevorratungseinrichtungen der erfindungsgemäßen Vorrichtung;
- Fig. 9:: eine dreidimensionale vergrößerte Detailansicht eines Teils des Schlittens einer erfindungsgemäßen Vorrichtung mit einem Positionsdetektor;
- Fig. 10:: eine dreidimensionale Ansicht eines erfindungsgemäßen Rahmengestells mit im Wesentlichen vertikal angeordneten Wurstrohren;
- Fig. 11:: eine dreidimensionale Ansicht des Rahmengestells nach Figur 9 in einer geneigten Position;
- Fig. 12:: eine weitere dreidimensionale Ansicht des Rahmengestells nach Figur 10;
- Fig. 13:: ein erfindungsgemäßes Wurstrohr mit Öffnung im geschlossenen Ende;
- Fig. 14:: in einem erfindungsgemäßen Rahmengestell angeordnete erfindungsgemäße Wurstrohre beim Entfernen der fertig hergestellten Wurstware aus den Wurstrohren; und
- Fig. 15:: eine Rückhaltevorrichtung für ein erfindungsgemäßes Rahmengestell. In den

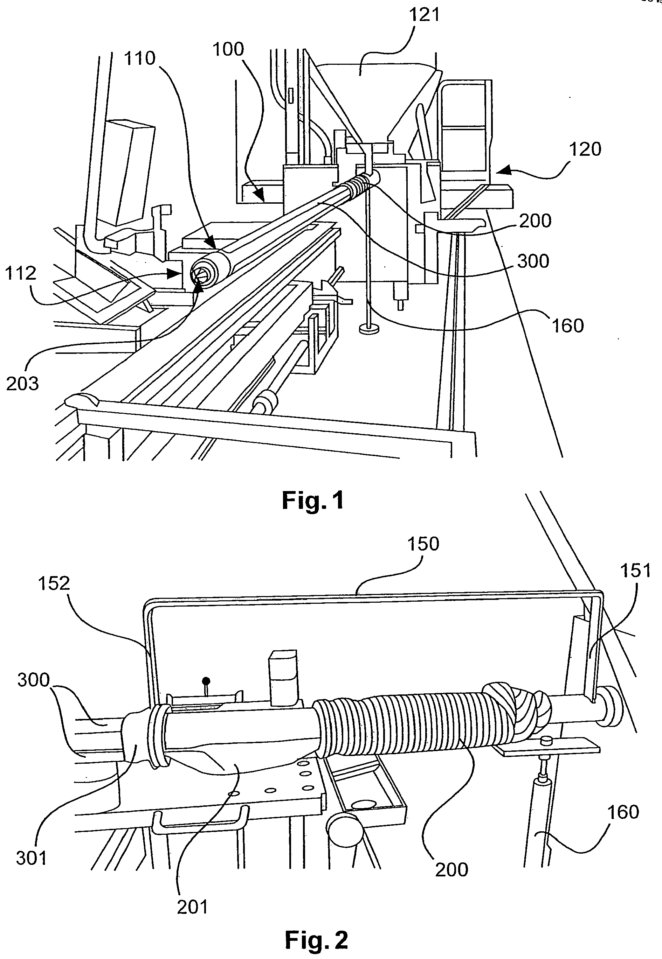

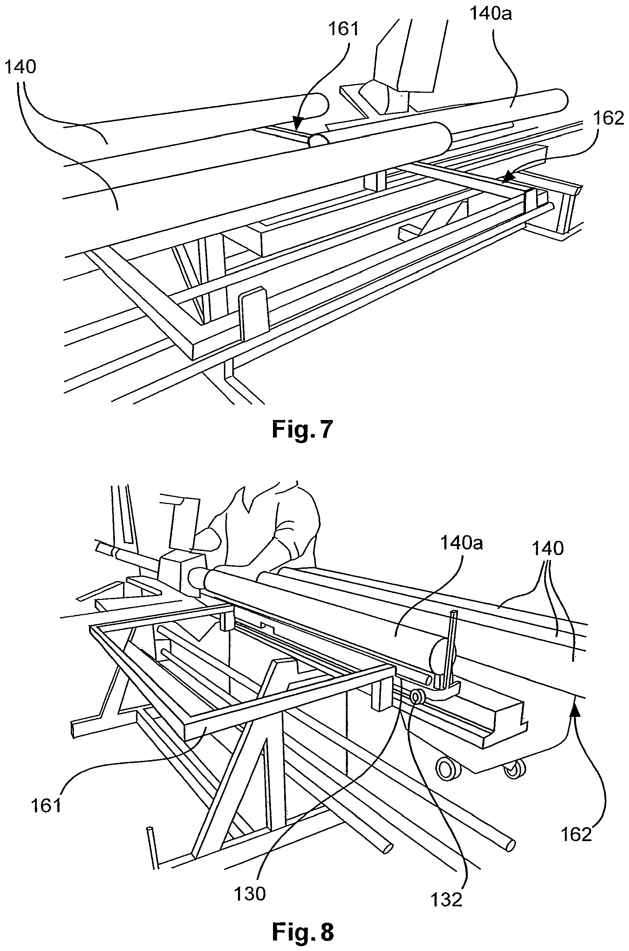

Figuren 1 bis 9 ist eine beispielhafte Ausführungsform einer erfindungsgemäßen Vorrichtung zur Herstellung kalibertreuer Würste bzw. von Teilen davon dargestellt. Die Vorrichtung 100 zur Herstellung kalibertreuer Würste gemäß der Figuren 1 bis 9 umfasst ein Füllrohr 110 mit einem kreisförmigen Füllrohrquerschnitt und einer Längsachse zum Befüllen von Wurstrohren 140, 140a mit Wurstbrät aus einem Wurstbrätspeicher 121, der zu einer Vakuumbefüllanlage 120 gehört.

Das Füllrohr 110 ist mit einem ersten Ende 101 an die Befüllvorrichtung 120 angebunden, so dass Wurstbrät aus einem Wurstbrätspeicher 121 am ersten Ende 111 in das Innere des Füllrohrs 110 gefördert werden kann und am Austrittsende 112 wieder aus dem Füllrohr 110 austreten kann. Wie insbesondere in den Figuren 1 bis 4 und 6 zu erkennen ist, ist am ersten Ende 111 des Füllrohrs 110 eine Darmraupe 200 angeordnet und mit einer Haltevorrichtung 150 mit zwei Armen 151, 152 fixiert, so dass der zu befüllende Darm 201, der koaxial über das Füllrohr 110 gezogen ist, von der Darmraupe 200 zum Austrittsende 112 hin abgezogen werden kann.

Über dem Darm 201 sind Führungsschienen 300 angeordnet, die hier äquidistant auf einem Kreisquerschnitt angeordnet sind, der größer ist als der kreisförmige Querschnitt des Füllrohrs 110 und kleiner ist als ein Innenquerschnitt des Wurstrohres 140, 140a. Die Führungsschienen 300 sind an ihren jeweiligen Enden mit ringförmigen Verbindungselementen 301, 302 versehen.

Das Verbindungselement 302 fungiert dabei gleichzeitig als Darmbremse. Diese strafft bzw. bremst den Darm 201 so, dass er dem Füllvorgang bzw. -Fortschritt entsprechend abgezogen wird. Dadurch wird der Darm 201 während des Füllvorgangs stramm mit Wurstbrät gefüllt.

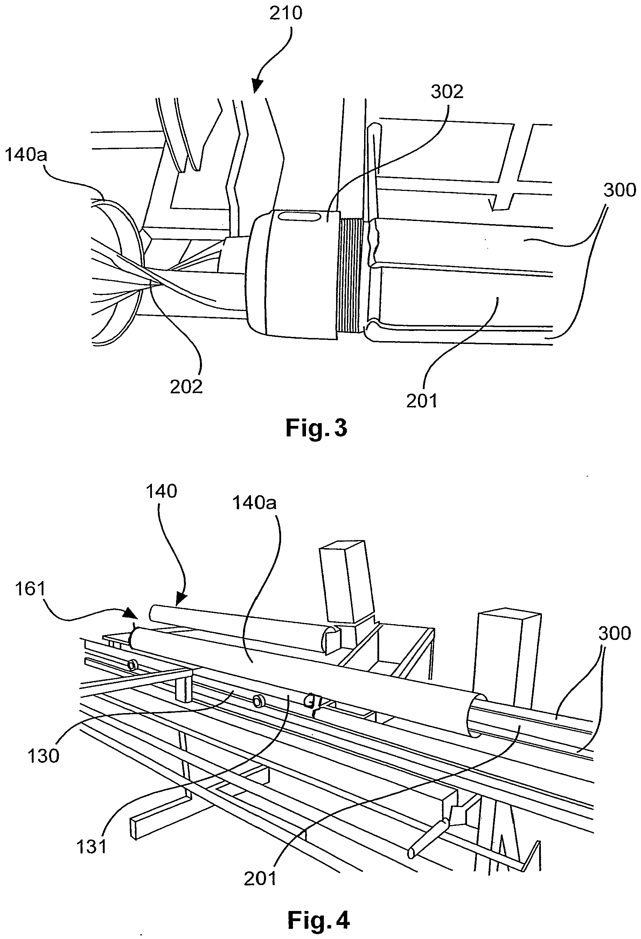

Die Führungsschienen 300 dienen dazu, beim Aufschieben des Wurstrohrs 140a auf das mit dem Darm 201 umhüllte Füllrohr 110 (wie in Figur 4 dargestellt) zu führen und u.a. Beschädigungen des Darms 201 zu verhindern.

In Figur 1 ist zu erkennen, dass der Darm 201 über die gesamte Länge des Füllrohrs bis zum Ende 112 des Füllrohrs gezogen ist und am Ende 112 des Füllrohrs mit einem Verschlusselement 203 verschlossen ist. Das Füllrohr 110 ist in dem in Figur 1 dargestellten Zustand mit Wurstbrät gefüllt. Zum Befüllen der Wurstrohre 140 wird von einer der Bevorratungsstationen 161, 162 (siehe insbesondere Figuren 4, 7 und 8) ein leeres Wurstrohr auf den Schlitten 130 gerollt und in der zweiten Position angeordnet, in der das Wurstrohr 140a in Längsrichtung von dem Füllrohr 110 beabstandet ist. Anschließend wird das Wurstrohr 140a mit dem Schlitten 130 koaxial zum Füllrohr 110 entlang der Längsachse des Füllrohrs und relativ zum Füllrohr auf dem Schlitten in eine erste Position bewegt, in der ein Abschnitt des Füllrohrs 110 im Inneren des Wurstrohrs 140a angeordnet ist. Besonders bevorzugt ist es, dass im Wesentlichen die gesamte Länge des Wurstrohrs 140a auf das Füllrohr 110 aufgeschoben wird, so dass das Austrittsende 112 des Füllrohrs 110 am oder nahe dem geschlossenen Ende 141 im Inneren des Wurstrohres 140a angeordnet ist.

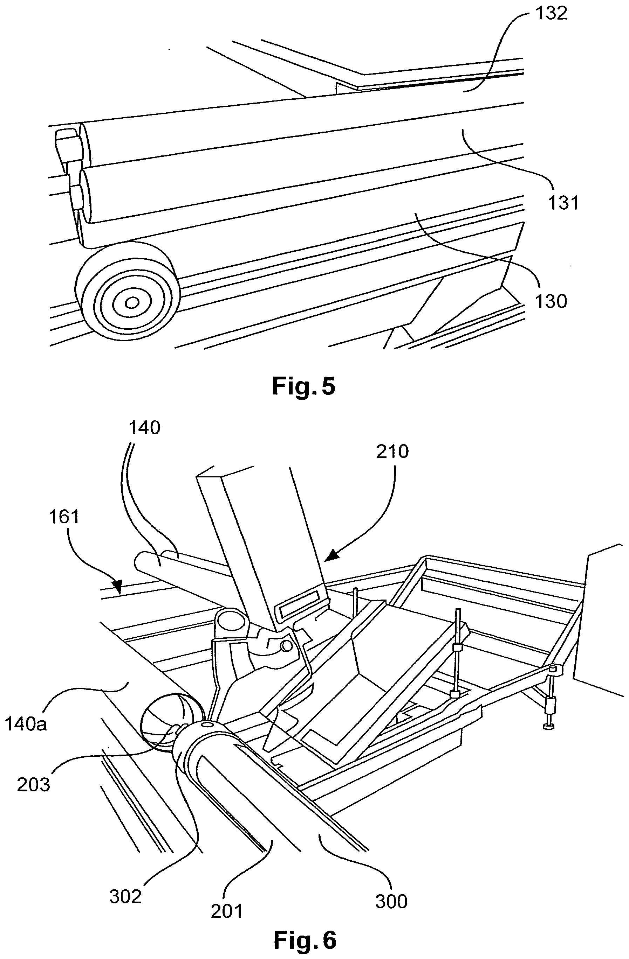

Beim Fördern von Wurstbrät aus dem Wurstbrätspeicher 121 über das Füllrohr 110 aus dem Austrittsende 112 des Füllrohrs 110 in das Innere des Wurstrohres 140a wird das Wurstrohr 140a über den Schlitten 130 entlang der Längsachse des Füllrohrs 110 wieder vom Füllrohr 110 entfernt, bis das Wurstrohr 140a sich wieder in der zweiten Position in Richtung der Längsachse beabstandet vom Füllrohr 110 befindet wie beispielsweise in Figur 3 und 6 dargestellt. In dieser zweiten Position wird das Wurstrohr 140a nun auf dem Schlitten 130 gedreht, so dass eine Verdrehung des Darms 201 im Bereich 202 zwischen dem Wurstrohr 140a und dem Füllrohr 110 entsteht, wie beispielsweise insbesondere in Figur 3 zu erkennen. Der Schlitten 130 weist dazu zwei parallel zur Längsachse und in einer Ebene angeordnete, um ihre jeweilige Achse drehbar gelagerte Rollen 131, 132 auf.

Im Bereich 202 wird nun mittels der Verschlussvorrichtung 210 ein Verschlusselement (ein sogenannter Clip) 203 aufgebracht und damit der Darm 201 am offenen Ende des Wurstrohres 140a verschlossen. Anschließend wird der Darm 201 zwischen dem Verschlusselement 203 und dem übrigen Darm 201 getrennt und vorzugsweise erneut verschlossen, damit im nächsten Füllrohr 140 am geschlossenen Ende 141 ein geschlossenes Darmende sitzt. Das so gefüllte Wurstrohr 140a kann durch Rollen über den Schlitten wieder auf die Bevorratungseinrichtung 161, 162 befördert werden, um von dort weiter transportiert zu werden. Der Fördervorgang von Wurstbrät durch das Füllrohr 110 aus dem Austrittsende 112 des Füllrohres hinaus kann vorzugsweise über einen Fußschalter betätigt und gestoppt werden.

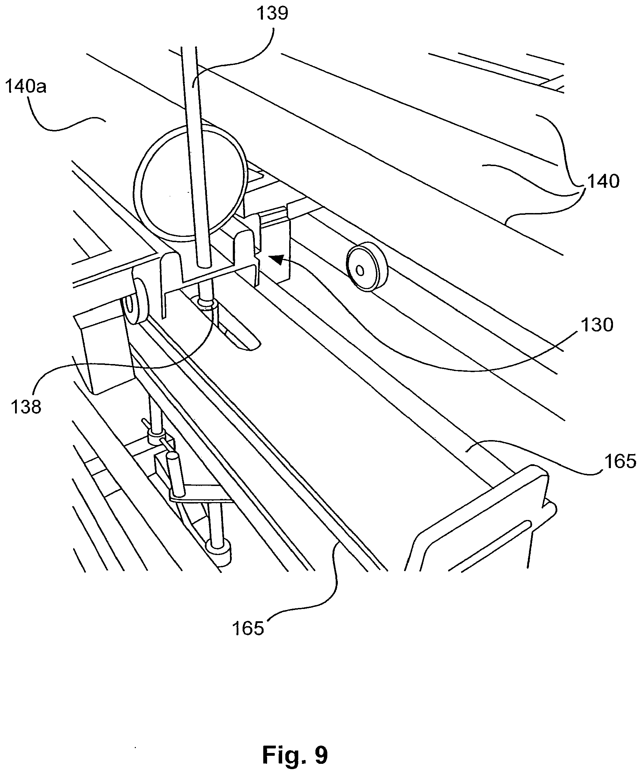

In Figur 9 ist der Schlitten 130 mit darauf angeordnetem Wurstrohr 140a nahe der zweiten Position in Richtung der Längsachse des Füllrohrs 110 dargestellt. Zum Blockieren einer Lageänderung des Wurstrohrs 140a in Längsrichtung des Füllrohrs über den Schlitten 130 hinaus ist ein Blockierbolzen 139 am Schlittenende angebracht. Dieser ist weiterhin vorteilhaft beim Anordnen des Wurstrohrs 140a auf dem Schlitten 130. Zwischen den Schienen 165, die zur Führung der Relativbewegung des Schlittens 130 in Längsachse zum Füllrohr 110 dienen, befindet sich ein Näherungssensor bzw. Kontaktgeber 138 zum Detektieren der zweiten Position des Wurstrohrs 140a. Dabei wird eine Verlängerung des Blockierbolzens 139 durch den Näherungssensor 138 detektiert. Durch Erkennen und Beenden des Befüllvorgangs beim Erreichen der zweiten Position kann somit eine gleich bleibende Wurstlänge gewährleistet werden.

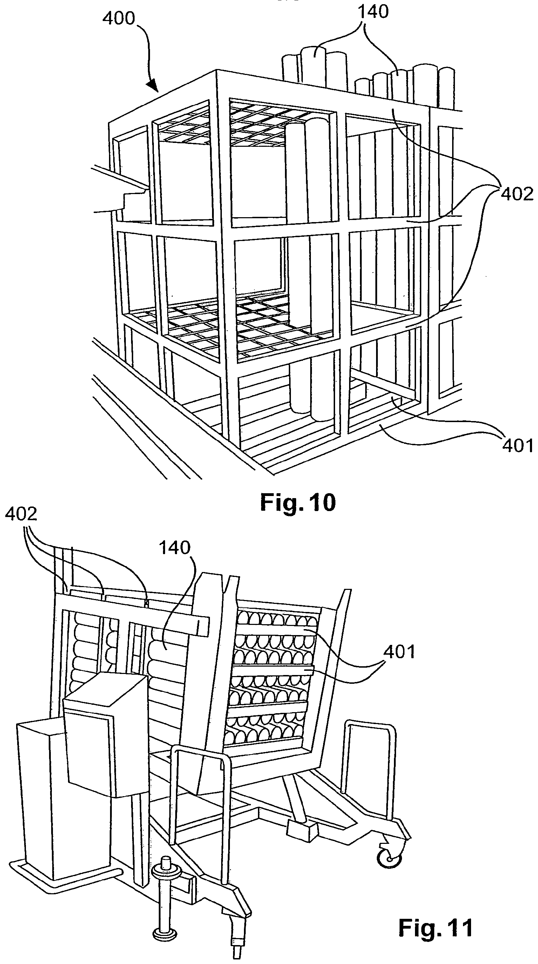

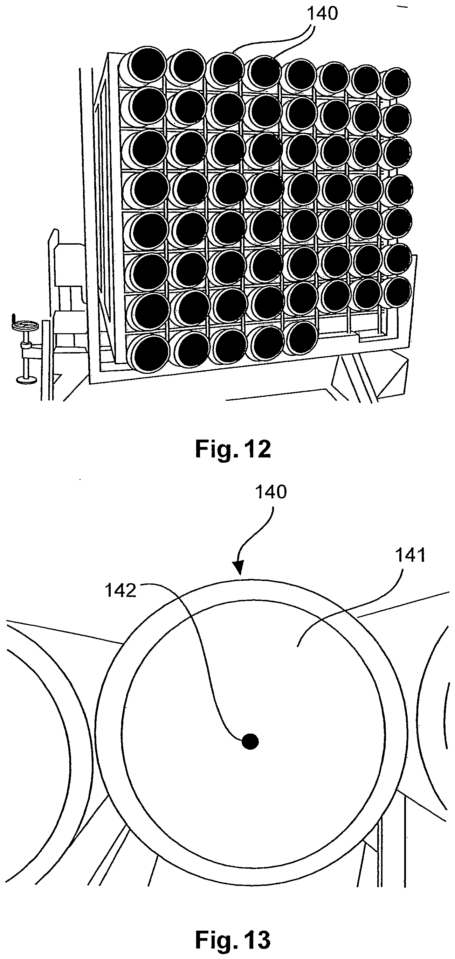

In den Figuren 10 bis 12 und 14 ist ein erfindungsgemäßes Rahmengestell 400 dargestellt, in dem mehrere Wurstrohre 140 parallel zueinander aufgenommen und in einer im Wesentlichen vertikalen Position, wie in Figur 10 dargestellt, in eine im Wesentlichen horizontale oder geneigte Position, wie in den Figuren 11, 12 und 14 dargestellt, bewegt werden kann und umgekehrt. Das Rahmengestell 400 weist einen Boden als Anschlag für die geschlossenen Enden 141 der Wurstrohre 140 auf, wobei der Boden aus parallel zueinander angeordneten und voneinander beabstandeten Streben 401 besteht. Die Streben 401 des Bodens sind derart angeordnet und ausgebildet, dass die Öffnungen 142 an den geschlossenen Enden 141 der Wurstrohre 140 durch den Boden zugänglich sind.

Das Rahmengestell 400 weist weiterhin drei kreuzgitterförmige Abstandsvorrichtungen 402 auf, die eine gleichmäßige und voneinander beabstandete Anordnung von 64 Wurstrohren 140 in einem 8 x 8 Raster auf quadratischer Grundfläche ermöglichen.

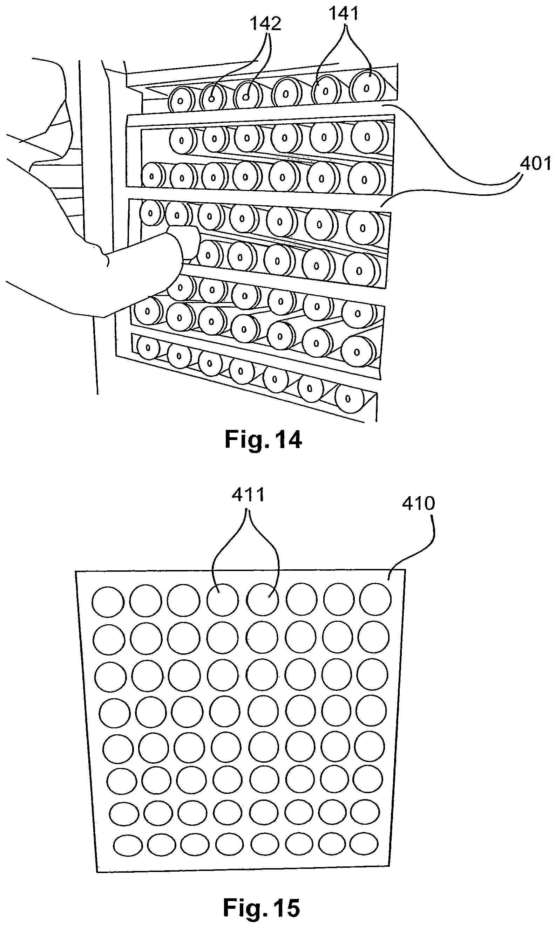

Das Rahmengestell 400 weist zusätzlich eine Rückhaltevorrichtung 410 gemäß Figur 15 auf mit Rückhalteöffnungen 411, wobei die Rückhaltevorrichtung 410 lösbar mit dem Rahmengestell 400 verbindbar ist, um einen Anschlag für die offenen Enden der Wurstrohre 140 zu bilden. Die kreisrunden Rückhalteöffnungen 411 der Rückhaltevorrichtung 410 sind derart ausgebildet und angeordnet, dass der Durchmesser der Rückhalteöffnungen 411 groß genug ist, um die in den Wurstrohren 140 befindlichen Wurstwaren passieren zu lassen, die Ränder der Rückhalteöffnungen 411 jedoch einen Anschlag bilden für die Wurstrohre 140.

Wie insbesondere in Figur 14 zu erkennen ist, ist der Boden mit den Streben 401 derart angeordnet und ausgebildet, dass in der im Wesentlichen horizontalen oder geneigten Position die Öffnungen 142 in den geschlossenen Enden 141 der Wurstrohre 140 von einem Bediener zugänglich sind, so dass die fertige Wurstware aus den offenen Enden der Wurstrohre 140 austragbar ist durch Einblasen von Druckluft in die Öffnungen 142 der geschlossenen Enden 141 der Wurstrohre 140.

Die verschiedenen Aspekte der vorliegenden Erfindung tragen dazu bei, Wurstrohre zur Herstellung kalibertreuer Würste zu verwenden, was wie zuvor beschrieben u. a. zu einer deutlichen Reduzierung der Kaliberschwankung der hergestellten Würste führt und weiterhin den Herstellungsprozess insgesamt vereinfacht und verbessert.

## Patentansprüche

1. Vorrichtung (100) zur Herstellung kalibertreuer Würste, umfassend:
mindestens ein Wurstrohr (140, 140a) mit einem über eine Wurstlänge konstanten Wurstrohrquerschnitt und einem geschlossenen Ende (141) und einem offenen Ende;
ein Füllrohr (110) mit einem Füllrohrquerschnitt und einer Längsachse zum Befüllen des Wurstrohres (140, 140a) mit Wurstbrät aus einem Wurstbrätspeicher (121); und
einen Schlitten (130), der angeordnet und ausgebildet ist, eine Relativbewegung entlang der Längsachse des Füllrohrs (110) des auf dem Schlitten (130) und im Wesentlichen koaxial zum Füllrohr (110) angeordneten Wurstrohrs (140, 140a) zum Füllrohr (110) von einer ersten in eine zweite Position und umgekehrt zu ermöglichen, wobei in der ersten Position ein Abschnitt des Füllrohrs (110) in dem Wurstrohr angeordnet ist und in der zweiten Position das Wurstrohr (140, 140a) von dem Füllrohr (110) in Richtung der Längsachse beabstandet ist;
wobei das Wurstrohr (140, 140a) an seinem geschlossenen Ende (141) eine Öffnung (142) aufweist, deren Durchmesser derart bemessen und angeordnet ist, dass in dem Wurstrohr (140, 140a) hergestellte und noch in dem Wurstrohr befindliche Wurstware mittels einer an die Öffnung (142) angesetzten Druckluftquelle aus dem offenen Ende des Wurstrohres (140, 140a) ausgetrieben werden kann.

2. Vorrichtung (100) nach dem vorhergehenden Anspruch,
**gekennzeichnet durch** eine Haltevorrichtung (150), die angeordnet und ausgebildet ist, eine im Wesentlichen koaxial zum Füllrohr angeordnete Darmraupe (200) an einem Ende (111) des Füllrohrs (110) zurückzuhalten und gleichzeitig eine kontinuierliche Abgabe von Darm (201) entlang der Längsachse des Füllrohrs (110) zu ermöglichen.

3. Vorrichtung (100) nach einem der beiden vorhergehenden Ansprüche,
**dadurch gekennzeichnet, dass** der Schlitten (130) derart ausgebildet und angeordnet ist, dass das auf dem Schlitten angeordnete Wurstrohr (140, 140a) um die Längsachse rotierbar ist, wobei vorzugsweise der Schlitten zwei parallel zur Längsachse und in einer Ebene angeordnete, um ihre jeweilige Achse drehbar gelagerte Rollen (131, 132) aufweist.

4. Vorrichtung (100) nach einem der vorhergehenden Ansprüche,
**gekennzeichnet durch** eine oder mehrere Gleitschienen (300), die derart um das Füllrohr (110) angeordnet und ausgebildet ist bzw. sind, dass sie eine, insbesondere im Wesentlichen koaxiale, Führung des Wurstrohres (140, 140a) relativ zum Füllrohr (110) unterstützen.

5. Vorrichtung (100) nach einem der vorhergehenden Ansprüche,
**gekennzeichnet durch** eine Bevorratungseinrichtung (161, 162), auf der ein, zwei oder mehrere Wurstrohre (140, 140a) in einer Ebene mit und parallel zu dem Füllrohr (110), von dem Füllrohr (110) in Richtung der Längsachse beabstandet und zur Längsachse des Füllrohrs (110) versetzt gelagert werden können.

6. Vorrichtung (100) nach einem der vorhergehenden Ansprüche,
**gekennzeichnet durch** einen oder mehrere Sensoren (139), die ausgebildet sind, die Position des Schlittens (130) und/oder Wurstrohrs (140a) entlang der Längsachse des Füllrohrs (110) zu detektieren, insbesondere das Erreichen der ersten und/oder zweiten Position zu erfassen.

7. Verwendung eines Wurstrohrs (140, 140a) zur Aufnahme von Wurstbrät in einer Vorrichtung (100) zur Herstellung kalibertreuer Würste, insbesondere einer Vorrichtung nach einem der vorhergehenden Ansprüche,
wobei das Wurstrohr (140, 140a) einen über eine Wurstlänge konstanten Wurstrohrquerschnitt und ein geschlossenes Ende (141) und ein offenes Ende aufweist, wobei das Wurstrohr (140, 140a) an seinem geschlossenen Ende (141) eine Öffnung (142) aufweist, deren Durchmesser derart bemessen und angeordnet ist, dass in dem Wurstrohr (140, 140a) hergestellte und noch in dem Wurstrohr (140, 140a) befindliche Wurstware mittels einer an die Öffnung (142) angesetzten Druckluftquelle aus dem offenen Ende des Wurstrohres (140, 140a) ausgetrieben werden kann.

8. Verwendung eines Rahmengestells (400) zur Aufnahme mehrerer Wurstrohre (140, 140a)
wobei die Wurstrohre (140, 140a) einen über eine Wurstlänge konstanten Wurstrohrquerschnitt und ein geschlossenes Ende (141) und ein offenes Ende aufweisen, wobei die Wurstrohre (140, 140a) an ihrem geschlossenen Ende (141) eine Öffnung (142) aufweisen, deren Durchmesser derart bemessen und angeordnet ist, dass in dem entsprechenden Wurstrohr (140, 140a) hergestellte und noch in dem entsprechenden Wurstrohr (140, 140a) befindliche Wurstware mittels einer an die Öffnung (142) angesetzten Druckluftquelle aus dem offenen Ende des Wurstrohres (140, 140a) ausgetrieben werden kann,
wobei das Rahmengestell (400) ausgebildet ist, mehrere Wurstrohre (140, 140a) parallel zueinander aufzunehmen und von einer im Wesentlichen horizontalen in eine im Wesentlichen vertikale Position und umgekehrt zu bewegen.

9. Verwendung nach Anspruch 8,
**dadurch gekennzeichnet, dass** das Rahmengestell (400) einen Boden als Anschlag für die geschlossenen Enden (141) der Wurstrohre (140, 140a) aufweist, wobei der Boden derart angeordnet und ausgebildet ist, dass die Öffnungen (142) an den geschlossenen Enden (141) der Wurstrohre (140, 140a) durch den Boden zugänglich sind.

10. Verwendung nach Anspruch 8 oder 9,
**gekennzeichnet durch** eine Rückhaltevorrichtung (410) mit Rückhalteöffnungen (411), wobei die Rückhaltevorrichtung (411) ausgebildet ist, in einer lösbaren Verbindung mit dem Rahmengestell (400) einen Anschlag für die offenen Enden der Wurstrohre (140, 140a) zu bilden, und die Rückhalteöffnungen (411) derart ausgebildet und angeordnet sind, dass in den Wurstrohren (140, 140a) hergestellte und noch in den Wurstrohren (140, 140a) befindliche Wurstware **durch** die Rückhalteöffnungen (411) der Rückhaltevorrichtung (410) austreten kann.

11. Verfahren zur Herstellung kalibertreuer Würste,
umfassend die Schritte:
- Fördern von Wurstbrät aus einem Wurstbrätspeicher (121) in ein Füllrohr (110), wobei das Füllrohr (110) einen Füllrohrquerschnitt und eine Längsachse aufweist,
- Platzieren eines Wurstrohres (140, 140a) im Wesentlichen koaxial zum Füllrohr (110) in einer ersten Position, in der ein Abschnitt des Füllrohrs in dem Wurstrohr angeordnet ist, wobei das Wurstrohr (140, 140a) einen über eine Wurstlänge konstanten Wurstrohrquerschnitt und ein geschlossenes Ende (141) und ein offenes Ende aufweist, wobei das Wurstrohr (140, 140a) an seinem geschlossenen Ende (141) eine Öffnung (142) aufweist;
- Fördern von Wurstbrät in das Wurstrohr (140, 140a) und gleichzeitig Bewegen des Wurstrohrs (140, 140a) relativ zum Füllrohr (110) entlang der Längsachse des Füllrohrs (110) mittels eines Schlittens (130) in eine zweite Position, in der das Wurstrohr (140, 140a) von dem Füllrohr (110) in Richtung der Längsachse beabstandet ist, und
- Austreiben von in dem Wurstrohr (140, 140a) hergestellter und noch in dem Wurstrohr (140, 140a) befindlicher Wurstware mittels einer an die Öffnung (142) in dem geschlossenen Ende (141) des Wurstrohrs (140, 140a) angesetzten Druckluftquelle aus dem offenen Ende des Wurstrohres (140, 140a).

12. Verfahren zum Lagern und/oder Verarbeiten kalibertreuer Würste, umfassend die Schritte:
- Bereitstellen eines in einem der Ansprüche 8 bis 10 verwendeten Rahmengestells,
- Anordnen mehrerer Wurstrohre (140, 140a) in dem Rahmengestell (400), wobei die Wurstrohre (140, 140a) einen über eine Wurstlänge konstanten Wurstrohrquerschnitt und ein geschlossenes Ende (141) und ein offenes Ende aufweisen, wobei die Wurstrohre (140, 140a) an ihrem geschlossenen Ende (141) eine Öffnung (142) aufweisen, deren Durchmesser derart bemessen und angeordnet ist, dass in dem entsprechenden Wurstrohr (140, 140a) hergestellte und noch in dem entsprechend Wurstrohr (140, 140a) befindliche Wurstware mittels einer an die Öffnung (142) angesetzten Druckluftquelle aus dem offenen Ende des Wurstrohres (140, 140a) ausgetrieben werden kann,
- Austreiben von in den Wurstrohren (140, 140a) hergestellter und noch in den Wurstrohren (140, 140a) befindlicher Wurstware mittels einer an die jeweilige Öffnung (142) in den geschlossenen Enden (141) der Wurstrohre (140, 140a) angesetzten Druckluftquelle aus den offenen Enden der Wurstrohre (140, 140a).

## Claims

1. A device (100) for producing calibration-true sausages, comprising:
at least one sausage tube (140, 140a) having a sausage tube cross section that is constant over a sausage length, a closed end (141) and an open end;
a stuffing tube (110) having a stuffing tube cross section and a longitudinal axis for filling the sausage tube (140, 140a) with sausage meat from a sausage meat store (121); and
a carriage (130), which is arranged and formed to allow a relative movement, along the longitudinal axis of the stuffing tube (110), between the sausage tube (140, 140a),
which is arranged on the carriage (130) and substantially coaxially to the stuffing tube (110), and the stuffing tube (110) from a first position to a second position and vice versa, wherein in the first position a section of the stuffing tube (110) is arranged in the sausage tube and in the second position the sausage tube (140, 140a) is spaced apart from the stuffing tube (110) in the direction of the longitudinal axis;
wherein the sausage tube (140, 140a) has at the closed end (141) thereof an opening (142), the diameter of which is dimensioned and arranged such that sausage products produced in the sausage tube (140, 140a) and still in the sausage tube can be driven out of the open end of the sausage tube (140, 140a) by means of a compressed air source attached to the opening (142).

2. The device (100) according to the preceding claim,
**characterised by**
a retaining device (150), which is arranged and formed to retain a casing bead (200) that is arranged substantially coaxially to the stuffing tube at one end (111) of the stuffing tube (110) and at the same time allow casing (201) to be dispensed continuously along the longitudinal axis of the stuffing tube (110).

3. The device (100) according to either of the preceding claims,
**characterised in that**
the carriage (130) is formed and arranged in such a manner that the sausage tube (140, 140a) arranged on the carriage can be rotated about the longitudinal axis, wherein the carriage preferably has two rollers (131, 132), which are arranged parallel to the longitudinal axis and in one plane and are mounted such that they can rotate about their respective axis.

4. The device (100) according to any one of the preceding claims,
**characterised by**
one or more sliding rails (300), which is/are arranged around the stuffing tube (110) and formed in such a manner that they support in particular coaxial guidance of the sausage tube (140, 140a) relative to the stuffing tube (110).

5. The device (100) according to any one of the preceding claims,
**characterised by**
a storage means (161, 162), on which one, two or more sausage tubes (140, 140a) can be stored in a plane with and parallel to the stuffing tube (110), spaced apart from the stuffing tube (110) in the direction of the longitudinal axis, and offset from the longitudinal axis of the stuffing tube (110).

6. The device (100) according to any one of the preceding claims,
**characterised by**
one or more sensors (139), which are formed to detect the position of the carriage (130) and/or sausage tube (140a) along the longitudinal axis of the stuffing tube (110), in particular to detect when the first and/or second position is reached.

7. A use of a sausage tube (140, 140a) to accommodate sausage meat in a device (100) for producing calibration-true sausages, in particular a device according to any one of the preceding claims,
wherein the sausage tube (140, 140a) has a sausage tube cross section that is constant over a sausage length, a closed end (141) and an open end, wherein the sausage tube (140, 140a) has at the closed end (141) thereof an opening (142), the diameter of which is dimensioned and arranged such that sausage products produced in the sausage tube (140, 140a) and still in the sausage tube (140, 140a) can be driven out of the open end of the sausage tube (140, 140a) by means of a compressed air source attached to the opening (142).

8. A use of a rack (400) for accommodating a plurality of sausage tubes (140, 140a),
wherein the sausage tubes (140, 140a) have a sausage tube cross section that is constant over a sausage length, a closed end (141) and an open end, wherein the sausage tubes (140, 140a) have at the closed end (141) thereof an opening (142), the diameter of which is dimensioned and arranged such that sausage products produced in the corresponding sausage tube (140, 140a) and still in the corresponding sausage tube (140, 140a) can be driven out of the open end of the sausage tube (140, 140a) by means of a compressed air source attached to the opening (142),
wherein the rack (400) is formed to accommodate a plurality of sausage tubes (140, 140a) parallel to each other and to move from a substantially horizontal position to a substantially vertical position and vice versa.

9. The use according to Claim 8,
**characterised in that**
the rack (400) has a base as a stop for the closed ends (141) of the sausage tubes (140, 140a), wherein the base is arranged and formed in such a manner that the openings (142) are accessible through the base at the closed ends (141) of the sausage tubes (140, 140a).

10. The use according to Claim 8 or 9,
**characterised by**
a retaining device (410) having retaining openings (411), wherein the retaining device (411) is configured to form a stop for the open ends of the sausage tubes (140, 140a) in a detachable connection to the rack (400), and the retaining openings (411) are formed and arranged in such a manner that sausage products produced in the sausage tubes (140, 140a) and still in the sausage tubes (140, 140a) can exit through the retaining openings (411) of the retaining device (410).

11. A method for producing calibration-true sausages,
comprising the steps:
- conveying sausage meat out of a sausage meat store (121) into a stuffing tube (110), wherein the stuffing tube (110) has a stuffing tube cross section and a longitudinal axis,
- positioning a sausage tube (140, 140a) substantially coaxially to the stuffing tube (110) in a first position, in which a section of the stuffing tube is arranged in the sausage tube, wherein the sausage tube (140, 140a) has a sausage tube cross section that is constant over a sausage length, a closed end (141) and an open end, wherein the sausage tube (140, 140a) has an opening (142) at the closed end (141) thereof;
- conveying sausage meat into the sausage tube (140, 140a) and at the same time moving the sausage tube (140, 140a) relative to the stuffing tube (110) along the longitudinal axis of the stuffing tube (110) by means of a carriage (130) into a second position, in which the sausage tube (140, 140a) is spaced apart from the stuffing tube (110) in the direction of the longitudinal axis, and
- driving sausage products produced in the sausage tube (140, 140a) and still in the sausage tube (140, 140a) out of the open end of the sausage tube (140, 140a) by means of a compressed air source attached to the opening (142) in the closed end (141) of the sausage tube (140, 140a).

12. A method for storing and/or processing calibration-true sausages,
comprising the steps:
- providing a rack used in one of Claims 8 to 10,
- arranging a plurality of sausage tubes (140, 140a) in the rack (400), wherein the sausage tubes (140, 140a) have a sausage tube cross section that is constant over a sausage length, a closed end (141) and an open end, wherein the sausage tubes (140, 140a) have at the closed end (141) thereof an opening (142), the diameter of which is dimensioned and arranged such that sausage products produced in the corresponding sausage tube (140, 140a) and still in the corresponding sausage tube (140, 140a) can be driven out of the open end of the sausage tube (140, 140a) by means of a compressed air source attached to the opening (142),
- driving sausage products produced in the sausage tubes (140, 140a) and still in the sausage tubes (140, 140a) out of the open ends of the sausage tubes (140, 140a) by means of a compressed air source attached to the opening (142) in the closed ends (141) of the sausage tubes (140, 140a).

## Revendications

1. Dispositif (100) pour fabriquer des saucisses de calibre respecté, comprenant :
au moins un tube à saucisses (140, 140a) comprenant une section transversale de tube à saucisses constante sur une longueur de saucisse et une extrémité fermée (141) et une extrémité ouverte ;
un tube de remplissage (110) avec une section transversale de tube de remplissage et un axe longitudinal pour remplir le tube à saucisses (140, 140a) de chair à saucisse à partir d'un récipient de chair à saucisse (121) ; et
un chariot (130) qui est ainsi disposé et conçu pour permettre un mouvement relatif le long de l'axe longitudinal du tube de remplissage (110) du tube à saucisse (140, 140a) disposé sur le chariot (130) et essentiellement coaxialement par rapport au tube de remplissage (110), en direction du tube de remplissage (110), d'une première à une seconde position et inversement, dans lequel dans la première position, un tronçon du tube de remplissage (110) est disposé dans le tube à saucisse et dans la seconde position, le tube à saucisse (140, 140a) est distant du tube de remplissage (110) en direction de l'axe longitudinal ;
dans lequel le tube à saucisse (140, 140a) présente une ouverture (142) sur son extrémité fermée (141) dont le diamètre est ainsi mesuré et disposé que de la marchandise de saucisse fabriquée dans le tube à saucisse (140, 140a) et se trouvant encore dans le tube à saucisse peut être poussée hors de l'extrémité ouverte du tube à saucisse (140, 140a) au moyen d'une source d'air comprimé placée sur l'ouverture (142).

2. Dispositif (100) selon la revendication précédente,
**caractérisé par** un dispositif de fixation (150) qui est disposé et conçu pour retenir une chenille de boyau (200) disposée essentiellement coaxialement par rapport au tube de remplissage sur une extrémité (111) du tube de remplissage (110) et permettre parallèlement une distribution continue de boyau (201) le long de l'axe longitudinal du tube de remplissage (110).

3. Dispositif (100) selon l'une des deux revendications précédentes,
**caractérisé en ce que** le chariot (130) est ainsi conçu et disposé qu'un tube à saucisse (140, 140a) disposé sur le chariot est rotatif sur l'axe longitudinal, dans lequel de préférence le chariot présente deux galets (131, 132) parallèles à l'axe longitudinal et placés rotatifs sur leur axe respectif, disposés dans un plan.

4. Dispositif (100) selon l'une des revendications précédentes,
**caractérisé par** un ou plusieurs rails de coulissement (300) qui est/sont ainsi disposé(s) et conçu(s) autour du tube de remplissage (110) qu'il(s) favorise(nt) un guidage du tube à saucisse (140, 140a) en particulier essentiellement coaxial, par rapport au tube de remplissage (110).

5. Dispositif (100) selon l'une des revendications précédentes,
**caractérisé par** un dispositif de constitution de stock (161, 162) sur lequel un, les deux ou plusieurs tube(s) à saucisse (140, 140a) dans un plan avec le, et parallèle au, tube de remplissage (110), peuvent être distants du tube de remplissage (110) en direction de l'axe longitudinal et peuvent être placés décalés par rapport à l'axe longitudinal du tube de remplissage (110).

6. Dispositif (100) selon l'une des revendications précédentes,
**caractérisé par** un ou plusieurs capteur(s) (139) qui est/sont conçu(s) pour détecter la position du chariot (130) et/ou du tube à saucisse (140a) le long de l'axe longitudinal du tube de remplissage (110), en particulier pour détecter que la position et/ou la seconde position(s) est/sont atteinte(s).

7. Emploi d'un tube à saucisse (140, 140a) pour recevoir de la chair à saucisse dans un dispositif (100) pour fabriquer des saucisses de calibre respecté, en particulier d'un dispositif selon l'une des revendications précédentes,
dans lequel le tube à saucisse (140, 140a) présente une section transversale de tube à saucisses constante sur une longueur de saucisse et une extrémité fermée (141) et une extrémité ouverte, dans lequel le tube à saucisse (140, 140a) présente une ouverture (142) sur son extrémité fermée (141) dont le diamètre est ainsi mesuré et disposé que de la marchandise de saucisse fabriquée dans le tube à saucisse (140, 140a) et se trouvant encore dans le tube à saucisse (140, 140a) peut être poussée hors de l'extrémité ouverte du tube à saucisse (140, 140a) au moyen d'une source d'air comprimé placée sur l'ouverture (142).

8. Emploi d'un bâti (400) pour recevoir plusieurs tubes à saucisse (140, 140a),
dans lequel les tubes à saucisse (140, 140a) comprennent une section transversale de tube à saucisses constante sur une longueur de saucisse et une extrémité fermée (141) et une extrémité ouverte, dans lequel le tube à saucisse (140, 140a) présente une ouverture (142) sur son extrémité fermée (141) dont le diamètre est ainsi mesuré et disposé que de la marchandise de saucisse fabriquée dans le tube à saucisse (140, 140a) et se trouvant encore dans le tube à saucisse (140, 140a) correspondant peut être poussée hors de l'extrémité ouverte du tube à saucisse (140, 140a) au moyen d'une source d'air comprimé placée sur l'ouverture (142),
dans lequel le bâti (400) est conçu pour recevoir plusieurs tubes à saucisse (140, 140a) parallèlement l'un à l'autre et pour les déplacer d'une position essentiellement horizontale à une position essentiellement verticale et inversement.

9. Emploi selon la revendication 8,
**caractérisé en ce que** le bâti (400) présente un fond en tant que butée pour les extrémités fermés (141) des tubes à saucisse (140, 140a), dans lequel le fond est ainsi disposé et conçu que les ouvertures (142) sur les extrémités fermées (141) des tubes à saucisse (140, 140a) sont accessibles par le fond.

10. Emploi selon la revendication 8 ou 9,
**caractérisé par** un dispositif de retenue (410) avec des ouvertures de retenue (411), dans lequel le dispositif de retenue (410) est conçu pour former une butée pour les extrémités ouvertes des tubes à saucisse (140, 140a) dans une liaison séparable avec le bâti (400), et les ouvertures de retenue (411) sont ainsi conçues et disposées que de la marchandise de saucisse fabriquée dans les tubes à saucisse (140, 140a) et se trouvant encore dans les tubes à saucisse (140, 140a) peut sortir par les ouvertures de retenue (411) du dispositif de retenue (410).

11. Procédé de fabrication de saucisses de calibre respecté,
comprenant les étapes de :
- transport de chair à saucisse d'un récipient de chair à saucisse (121) dans un tube de remplissage (110), dans lequel le tube de remplissage (110) présente une section transversale de tube de remplissage et un axe longitudinal,
- placement d'un tube à saucisse (140, 140a) essentiellement coaxialement au tube de remplissage (110) dans une première position dans laquelle un tronçon du tube de remplissage est disposé dans le tube à saucisse, dans lequel le tubes à saucisse (140, 140a) présente une section transversale de tube à saucisses constante sur une longueur de saucisse et une extrémité fermée (141) et une extrémité ouverte, dans lequel le tube à saucisse (140, 140a) présente une ouverture (142) sur son extrémité fermée (141) ;
- transport de chair à saucisse dans le tube à saucisse (140, 140a) et parallèlement, déplacement du tube à saucisse (140, 140a) par rapport au tube de remplissage (110) le long de l'axe longitudinal du tube de remplissage (110) au moyen d'un chariot (130) dans une seconde position dans laquelle le tube à saucisse (140, 140a) est distant du tube du remplissage (110) en direction de l'axe longitudinal, et
- poussée de marchandise de saucisse fabriquée dans le tube à saucisse (140, 140a) et se trouvant encore dans le tube à saucisse (140, 140a) au moyen d'une source d'air comprimé placée sur l'ouverture (142) dans l'extrémité fermée (141) du tube à saucisse (140, 140a), hors de l'extrémité ouverte du tube à saucisse (140, 140a).

12. Procédé de stockage et/ou de traitement de saucisses au calibre respecté,
comprenant les étapes de :
- mise à disposition d'un bâti employé dans une des revendications 8 à 10,
- agencement de plusieurs tubes à saucisse (140, 140a) dans le bâti (400), dans lequel les tubes à saucisse (140, 140a) présentent une section transversale de tube à saucisses constante sur une longueur de saucisse et une extrémité fermée (141) et une extrémité ouverte, dans lequel les tubes à saucisse (140, 140a) présentent une ouverture (142) sur leur extrémité fermée (141) dont le diamètre est ainsi mesuré et disposé que de la marchandise de saucisse fabriquée dans le tube à saucisse (140, 140a) correspondant et se trouvant encore dans le tube à saucisse (140, 140a) correspondant peut être poussée hors de l'extrémité ouverte du tube à saucisse (140, 140a) au moyen d'une source d'air comprimé placée sur l'ouverture (142) dans l'extrémité ouverte du tube à saucisse (140, 140a),
- poussée hors des extrémités ouvertes des tubes à saucisse (140, 140a), de marchandise de saucisse fabriquée dans les tubes à saucisse (140, 140a) et se trouvant encore dans les tubes à saucisse (140, 140a) au moyen d'une source d'air comprimé placée sur l'ouverture (142) respective dans les extrémités fermées (141) des tubes à saucisses (140, 140a).
